(19) Europäisches Patentamt
European Patent Office
Office européen des brevets

(11) **EP 1 173 781 B1**

(12) **FASCICULE DE BREVET EUROPEEN**

(45) Date de publication et mention
de la délivrance du brevet:
**03.09.2008 Bulletin 2008/36**

(51) Int Cl.:
*G01V 1/02* (2006.01)     *G01V 1/00* (2006.01)

(21) Numéro de dépôt: **01907745.2**

(86) Numéro de dépôt international:
**PCT/FR2001/000379**

(22) Date de dépôt: **09.02.2001**

(87) Numéro de publication internationale:
**WO 2001/059481 (16.08.2001 Gazette 2001/33)**

(54) **METHODE ET DISPOSITIF DE SURVEILLANCE SISMIQUE D'UNE ZONE SOUTERRAINE PAR UTILISATION SIMULTANEE DE PLUSIEURS SOURCES VIBROSISMIQUES**

VERFAHREN UND VORRICHTUNG ZUR SEISMISCHEN ÜBERWACHUNG EINES UNTERIRDISCHEN GEBIETS UNTER GLEICHZEITIGER VERWENDUNG VON MEHREREN VIBROSEISMISCHEN QUELLEN

METHOD AND APPARATUS FOR SEISMIC MONITORING OF AN UNDERGROUND ZONE BY SIMULTANEOUS USE OF SEVERAL VIBROSEISMIC SOURCES

(84) Etats contractants désignés:
**AT BE CH CY DE DK ES FI FR GB GR IE IT LI LU MC NL PT SE TR**

(30) Priorité: **14.02.2000 FR 0001792**

(43) Date de publication de la demande:
**23.01.2002 Bulletin 2002/04**

(73) Titulaires:
• **Institut Français du Pétrole**
**92852 Rueil-Malmaison Cedex (FR)**
• **GAZ DE FRANCE (SERVICE NATIONAL)**
**F-75840 Paris (FR)**
• **COMPAGNIE GENERALE DE GEOPHYSIQUE**
**F-91341 Massy Cédex (FR)**

(72) Inventeur: **MEUNIER, Julien**
**75013 Paris (FR)**

(56) Documents cités:
**EP-A- 0 419 245          EP-A- 0 937 997**
**WO-A-00/72049          DE-A- 1 913 875**
**GB-A- 2 306 219          US-A- 4 188 611**

**EP 1 173 781 B1**

## Description

La présente invention concerne une méthode et un dispositif de surveillance sismique d'une zone souterraine telle qu'un gisement ou réservoir, comportant l'utilisation simultanée de plusieurs vibrateurs sismiques.

## Etat de la technique

Il est connu de surveiller les variations d'état à long terme d'un réservoir en cours de production qu'il s'agisse d'un gisement d'hydrocarbures ou d'un réservoir destiné au stockage de gaz, au moyen d'un système sismique comportant une source sismique impulsionnelle ou un vibrateur sismique pour émettre des ondes sismiques dans le sol et un dispositif de réception comportant des capteurs sismiques disposés en surface ou dans des puits et couplés avec les formations à surveiller. A intervalles de temps définis, on réalise des investigations sismiques avec émission d'ondes, réception des ondes renvoyées par les discontinuités du sous-sol et enregistrement de sismogrammes, de façon à déterminer par comparaison des modifications intervenues dans le réservoir, résultant de son exploitation.

Différents systèmes de surveillance sismique à long terme sont décrits par exemple dans les brevets EP 591 037 (US 5 461 594), FR 2 593 292 (US 4 775 009), FR 2 728 973 (US 5 724 311) ou FR 2 775 349.

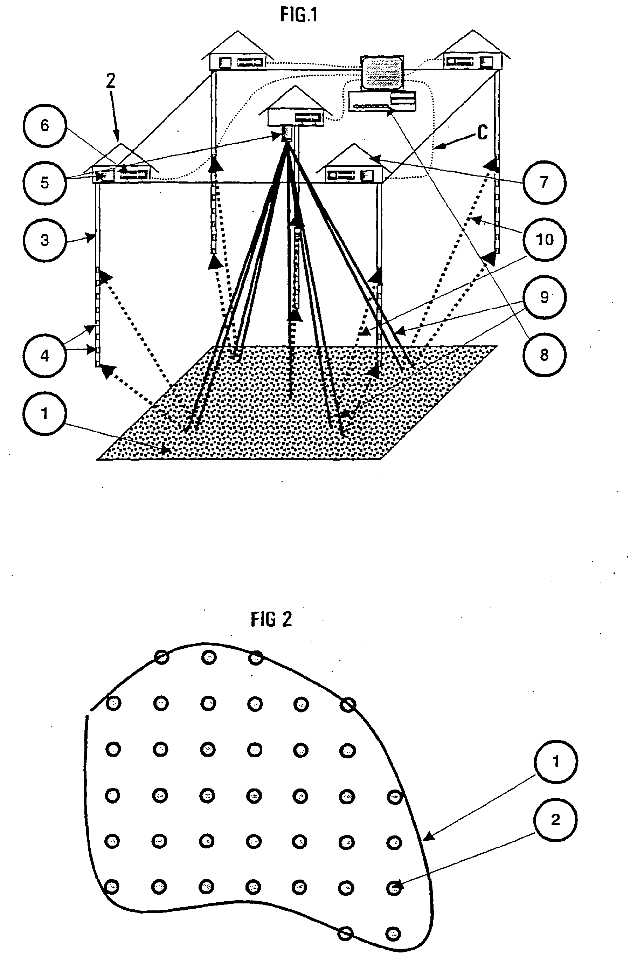

Par les brevets FR 2 728 973 et FR 2 775 349 notamment, on connaît des systèmes de surveillance sismique d'une zone souterraine en cours d'exploitation, qu'il s'agisse d'un réservoir d'hydrocarbures ou d'un réservoir de stockage de gaz par exemple. Comme schématisés aux Fig.1 à 3, ils comportent par exemple un réseau d'antennes sismiques 2 constituées chacune d'un ensemble de capteurs sismiques 4 disposés à intervalles réguliers le long d'un puits 3 foré dans le sol. Ce réseau peut être régulier comme schématisé sur la Fig.2, ou irrégulier. Les capteurs peuvent être des géophones mono-directionnels orientés verticalement ou multi-axes (triphones) et/ou des hydrophones. A proximité de chaque antenne 2, est disposé une source sismique 5. Comme sources, on utilise avantageusement des vibrateurs de type piézoélectrique, tels que décrit dans la demande de brevet FR 99/04 001 au noms conjoints des demandeurs, qui sont installés à demeure au voisinage immédiat de chaque antenne 2.

Les ondes sismiques générées par la ou chaque source sismique 5 se propagent vers le bas (ondes descendantes 9). Ces ondes incidentes sont tout d'abord enregistrées par les récepteurs 4 de chaque puits 3. Les ondes renvoyées par les discontinuités de la zone (interfaces sismiques) se propagent vers le haut. Ces ondes montantes 10 sont enregistrées aussi par les différents récepteurs 4. De la sorte, les ondes montantes et descendantes sont superposées sur les sismogrammes. On les traite habituellement par une méthode identique à celle du traitement des PSV (Profils Sismiques Verticaux) bien connue des gens de l'art.

Les différentes sources du système sismique peuvent être actionnées successivement, en ménageant entre les déclenchements un intervalle de temps suffisant pour recevoir les ondes renvoyées par la zone investiguée. On peut aussi utiliser plusieurs sources sismiques émettant les mêmes signaux que l'on déclenche simultanément pour augmenter la puissance émise.

Par le brevet FR 2 589 587 (US 4 780 856), on connaît également une méthode de prospection sismique marine comportant l'émission d'ondes sismiques par un vibrateur ou simultanément par plusieurs vibrateurs piloté(s) par des signaux vibratoire codés en accord avec un code pseudo-aléatoire.

## La méthode selon l'invention

La méthode selon l'invention permet de réaliser des opérations de surveillance sismique d'une formation souterraine. Elle comporte :

- l'émission d'ondes sismiques dans la formation en couplant avec la formation au moins deux vibrateurs émettant simultanément et pilotés par des signaux orthogonaux les uns relativement aux autres, de manière à former un signal vibratoire composite,

- la réception des signaux renvoyées par la formation en réponse à l'émission des ondes sismiques,

- l'enregistrement des signaux reçus par au moins un capteur sismique, et

- la formation de sismogrammes par un traitement des signaux enregistrés comprenant une discrimination des contributions respectives des vibrateurs au signal vibratoire composite et une reconstruction de sismogrammes équivalents à ceux que l'on obtiendrait en actionnant séparément les vibrateurs.

Comme signaux orthogonaux, on utilise par exemple des signaux sinusoïdaux de fréquences différentes les unes des autres aussi bien par leurs composantes fondamentales que par leurs harmoniques respectives, ou des signaux formés à base d'ondelettes, de polynomes de Legendre ou de séries aléatoires, etc.

Dans le cas notamment où les signaux orthogonaux émis sont des sinusoïdes, on réalise par exemple la discrimination des contributions respectives des vibrateurs, par détermination de l'amplitude et de la phase du signal vibratoire composite aux fréquences fondamentales des signaux de pilotage appliqués aux vibrateurs.

La discrimination des contributions respectives des vibrateurs comporte par exemple une pondération des signaux enregistrés par un facteur de pondération (ou d'apodisation) en cloche et une détermination de l'amplitude et de la phase du signal composite.

Pour réaliser la discrimination des contributions respectives des vibrateurs, on effectue par exemple une sélection par transformée de Fourier, de raies du spectre complexe associées respectivement aux différents signaux pondérés.

La reconstruction des sismogrammes correspondant spécifiquement aux différents vibrateurs est effectuée par exemple en appliquant, après leur séparation, une transformée de Fourier inverse, aux raies associées respectivement aux différents signaux pondérés.

Suivant un mode d'implémentation, on décale par pas de fréquence, à intervalles de temps déterminés, les fréquences des signaux de pilotage orthogonaux appliqués respectivement aux différents vibrateurs, de façon à balayer une certaine bande de fréquence d'émission.

Le système de surveillance sismique d'une formation souterraine selon l'invention comporte des moyens d'émission de vibrations sismiques dans la formation comprenant au moins deux vibrateurs et des moyens pour générer des signaux orthogonaux les uns relativement aux autres et les appliquer respectivement aux vibrateurs de manière à générer dans la formation un signal vibratoire composite, des moyens de réception des signaux renvoyés par la formation en réponse à l'émission des ondes sismiques, des moyens d'enregistrement des signaux reçus par les moyens de réception des signaux et des moyens de traitement de signaux enregistrés pour former des sismogrammes comprenant au moins un calculateur adapté à effectuer une discrimination des contributions respectives des vibrateurs au signal vibratoire composite et une reconstruction de sismogrammes équivalents à ceux que l'on obtiendrait en actionnant séparément les vibrateurs.

Suivant un premier mode d'implémentation, le système comporte au moins deux unités locales disposées à distance les uns des autres et couplées avec la formation, chaque unité comportant au moins un capteur sismique, un vibrateur sismique, un dispositif local d'acquisition et de traitement des signaux reçus, et une unité centrale de commande et de synchronisation connectée aux différentes unités, comprenant un générateur adapté à appliquer aux vibrateurs les signaux vibratoires de pilotage orthogonaux.

Suivant un autre mode d'implémentation, le système comporte au moins deux unités locales disposées à distance les uns des autres et couplées avec la formation, chaque unité comportant au moins un capteur sismique, un vibrateur sismique, et une unité centrale de commande et de synchronisation connectée aux différentes unités locales par liaison matérielle (des câbles par exemple) ou immatérielle (par radio) et comprenant un générateur de signaux adapté à former les différents signaux vibratoires de pilotage orthogonaux, et des moyens d'acquisition des signaux reçus par les différentes antennes et de reconstruction des sismogrammes correspondant aux contributions des différents vibrateurs.

Les moyens de réception comportent par exemple au moins une antenne constituée de plusieurs capteurs sismiques disposés le long d'un puits ménagé dans la formation, cette antenne étant connectée aux moyens d'enregistrement.

## Présentation des figures

D'autres caractéristiques et avantages de la méthode et du système selon l'invention, apparaîtront à la lecture de la description ci-après d'exemples non limitatifs de réalisation, en se référant aux dessins annexés où :

- la Fig.1 montre schématiquement un système de surveillance d'une formation souterraine comprenant plusieurs ensembles d'émission et d'acquisition de signaux ;

- la Fig.2 montre un exemple de répartition en surface d'ensembles de surveillance ;

- la Fig.3 montre schématiquement un ensemble d'émission et d'acquisition de signaux comprenant des capteurs sismiques disposés pour former des antennes ;

- la Fig.4 montre une variante du système de surveillance de la Fig.1 où les moyens d'acquisition des signaux sismiques sont centralisés dans un poste central ;

- la Fig.5 illustre les différents étapes de l'algorithme de mise en oeuvre de la méthode ; et

- la Fig.6 montre schématiquement le trajet des ondes entre deux points d'émission X1, X2 et un point de réception commun.

## Description détaillée

La méthode permet donc de réaliser des opérations de surveillance sismique d'une zone souterraine en utilisant un ensemble de capteurs sismiques et une pluralité de vibrateurs actionnés simultanément par des signaux à des fréquences différentes choisies de façon que l'on puisse discriminer les contributions de chaque source sur les sismogrammes réalisés à partir des signaux reçus et enregistrés. Ceci est réalisé d'une façon générale par le pilotage des différentes sources par des signaux «orthogonaux» traduisant des fonctions dites orthogonales bien connues des gens de l'art et par utilisation de techniques de calcul numérique connues tells que la transformée de Fourier inverse pour séparer les contributions aux sismogrammes obtenus des différents vibrateurs, comme on va l'expliquer ci-après en utilisant les notations suivantes :

|   |                       |                 |            |
|---|-----------------------|-----------------|------------|
| • | Convolution           | *               |            |
| • | Corrélation           | ★               |            |
| • | Durée d'émission      | $t_s$           | (secondes) |
| • | Temps d'écoute        | $t_e$           | (secondes) |
| • | Pas d'échantillonnage | $t_i$           | (secondes) |
| • | Fréquence initiale    | $f_b$           | (Hertz)    |
| • | Fréquence finale      | $f_f$           | (Hertz)    |
| • | Fréquence élémentaire | $f_i = l/t_e$   | (Hertz)    |
| • | Largeur de raie       | $f_d$           | (Hertz)    |

A- F'onctions orthogonales

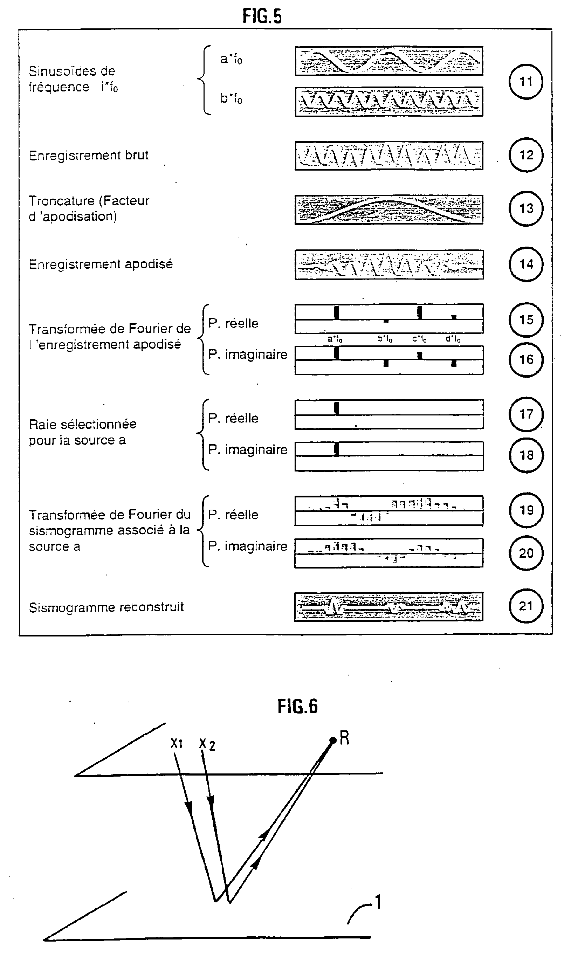

On considère deux signaux unitaires $P_1$ et $P_2$ sinusoïdaux de fréquences respectives $f_1$ et $f_2$ émis par deux sources $S_1$ et $S_2$ situées aux points $X_1$ et $X_2$ (Fig.6) pendant une durée $t_s$ grande devant $l/f_1$ et $l/f_2$.

$$P_1 \quad = \quad \sin 2\pi f_1 t$$

$$P_2 \quad = \quad \sin 2\pi f_2 t$$

Le sismogramme enregistré des signaux reçus en un point R de réception à partir de la source $S_1$ émettant seule est : $T_1 = A_1 \sin(2\pi f_1 t - \Phi_1)$, où $\Phi_1$ est un retard de phase.
De même le sismogramme observé au même point R à partir de $S_2$ émettant seule est : $T_2 = A_2.\sin(2\pi f_2 t - \Phi_2)$ où $\Phi_2$ est pareillement un retard de phase.
Si $S_1$ et $S_2$ émettent simultanément, la linéarité de la transmission des ondes sismiques fait que le sismogramme des ondes reçues en R est la somme de $T_1$ et $T_2$.
Si de plus f1 ≠ f2,

$$P_2 \star P_1 = \quad 0 \qquad\qquad (A),$$

$$T \star P_1 = \quad T_1 \star P_1 \qquad (B),$$

et

$$T \star P_2 = \quad T_2 \star P_2 \qquad\qquad (C)$$

L'équation (A) exprime l'orthogonalité des signaux $P_1$ et $P_2$; les équations (B) et (C) traduisent la possibilité de séparer le signal composite T en ses deux composantes. Cette propriété s'étend en théorie à un nombre quelconque de sources émettant des sinusoïdes de fréquences différentes ou plus précisément des signaux orthogonaux entre eux mais dans la pratique, le nombre de sources doit être limité à cause des phénomènes suivants :

a) la distorsion qui ne peut en effet être négligée avec des sources mécaniques. En même temps que la fréquence $f_1$, la source $S_1$ émet les fréquences $2f_1$, $3f_1$ ... $nf_1$. En conséquence, si $f_i$ et $f_j$ sont les fréquences respectives des deux sources Si et Sj de l'ensemble de sources, il convient non seulement que $f_i \neq f_j$ mais aussi que $f_i \neq 2f_j$, $f_i \neq 3f_j$ , ... $f_i \neq nf_j$ ;

b) le caractère nécessairement tronqué de la durée d'émission ($t_s$) qui se traduit dans le domaine des fréquences en réalisant une convolution de la raie (impulsion) par la transformée de Fourier de la troncature. Si celle-ci est brutale (multiplication par un créneau de longueur $t_s$), c'est un sinus cardinal de grande largeur. Si au contraire elle est progressive (multiplication par une courbe en cloche, gaussienne ou fonction de Hanning par exemple), c'est une autre fonction en cloche de largeur inversement proportionnelle à la longueur de la troncature ; et

c) l'imperfection des sources qui affecte leur stabilité et la précision des fréquences émises. En pratique, on peut considérer que cette imperfection contribue simplement à l'augmentation de la largeur de raie.

Les fonctions orthogonales les plus simples sont des sinusoïdes de fréquences différentes. D'autres fonctions orthogonales peuvent aussi être utilisées : fonctions basées sur les polynomes de Legendre, ondelettes, séries aléatoires, etc.

B.- <u>Réversibilité de la transformée de Fourier.</u>

Si au lieu d'émettre une sinusoïde $T_i$ de fréquence $f_i$, de module $A_i$ et de phase $\Phi_i$, on émet le signal composite $P_t$ constitué de la somme de N sinusoïdes {$f_i$, $A_i$, $\Phi_i$} avec $1 \leq i \leq N$, toutes les fréquences étant contenues dans une bande spectrale comprise entre deux fréquences limites $f_b$ et $f_f$, le sismogramme $T_t$ observé au point R aura pour transformée de Fourier à la fréquence $f_i$ , le nombre de module $A_i$ et de phase $\Phi_i$ égaux à l'amplitude et à la phase de la sinusoïde $T_i$. On peut ainsi, en émettant successivement toutes les sinusoïdes de fréquences $f_b$ à $f_f$, reconstruire par transformée de Fourier inverse le sismogramme $T_t$.

Dans le cas où, par exemple, toutes les amplitudes $A_i$ sont égales à 1 et toutes les phases $\Phi_i$ = 0, le signal $P_t$ obtenu est très proche de celui résultant de l'auto-corrélation d'un signal à fréquence glissante variant dans l'intervalle $[f_b$ - $f_f,]$ (sweep), utilisé couramment en vibrosismique. D'après la théorie de la transformée de Fourier discrète, bien connue des gens de l'art, si l'on désire écouter la source $S_1$ pendant le temps $t_e$, l'incrément de fréquence entre les sinusoïde est $\Delta f$ = l/$t_e$ et le nombre de sinusoïdes nécessaires est $N_f$ = ($f_f$ - $f_b$)$t_e$.

On peut donc exciter simultanément N vibrateurs installés sur le terrain au moyen de signaux vibratoires de fréquences telles que chaque source est excitée successivement par chacune des $N_f$ sinusoïdes ci-dessus à chaque instant, sous réserve que les fréquences respectives des sinusoïdes émises à un même instant par les différents vibrateurs sont toutes différentes les unes des autres. La séparation des signaux reçus par les capteurs sur le terrain, en réponse à l'émission simultanée des différents signaux est ainsi obtenue par sélection de la raie à la fréquence appropriée.

La Fig. 5 illustre schématiquement les différentes étapes de la méthode. On applique simultanément aux différentes sources sismiques 5 installées sur le terrain des signaux pilotes sinusoïdaux 11 de fréquences respectives $af_0$, $bf_0$, $cf_0$, dfo etc., les coefficients a, b, c, d, etc. étant choisis pour que ces fréquences soient différentes les unes des autres et différentes de leurs harmoniques respectives. Ces fréquences sont des multiples entiers d'une fréquence fondamentale $f_0$.

Le sismogramme 12 que l'on obtient en enregistrant les ondes reçues par les capteurs des différentes antennes 4, est une combinaison linéaire des sismogrammes qui auraient été obtenus en excitant les sources 5 séquentiellement.

On pondère alors les signaux enregistrés en les multipliant par un facteur de pondération en cloche dit d'apodisation (tapering) 13 pour former des signaux apodisés ou pondérés 14. Puis, on calcule la partie réelle 15 et la partie imaginaire 16 de la transformée de Fourier des signaux apodisés. Chacune de ces parties est composée d'impulsions bien séparées les unes des autres. Pour chaque source 5, on ne conserve alors que le nombre réel 17 et le nombre imaginaire 18 formant la valeur complexe de la transformée de Fourier à la fréquence émise par la source.

Les ensembles de différents nombres 17 et 18 quand la source émet toutes les fréquences programmées, forment la partie réelle 19 et la partie imaginaire 20 du sismogramme 21 associé à la source. On obtient ce sismogramme par transformée de Fourier inverse.

Suivant un premier exemple d'implémentation de la méthode, le système comporte une pluralité d'unités locales LU comprenant chacune une antenne 2 reliée par des câbles (non représentés) et un dispositif local d'acquisition et de traitement 6 (Fig.1, 2), et les différents vibrateurs sont reliés par des câbles C par exemple, à une unité centrale 8 de commande et de synchronisation comprenant un générateur de signaux (non représenté) adapté à générer, pour les différents vibrateurs 5, les signaux orthogonaux de pilotage tels qu'ils ont été définis plus haut.

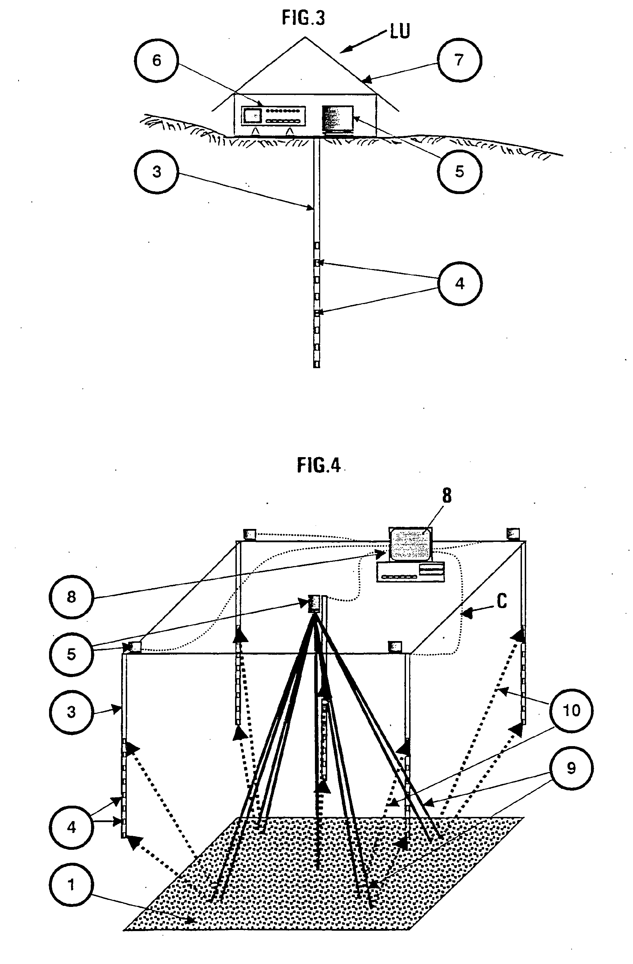

Suivant un autre mode d'implémentation (Fig.4), les différentes antennes de réception 2 sont reliées par des câbles C par exemple, avec l'unité centrale de commande et de synchronisation 8 qui assure les tâches de génération des signaux composites pour les différentes sources 5 et l'acquisition et l'enregistrement des signaux reçus par les capteurs 4 et le traitement des signaux acquis.

Les câbles C peuvent bien entendu être remplacés d'une façon générale par toute liaison matérielle ou immatérielle (liaison hertzienne, fibre optique etc.).

Les dispositifs locaux d'acquisition et de traitement 6 et/ou l'unité centrale de commande et de synchronisation 8 comportent des calculateurs tels que des PC programmés pour effectuer les traitements visant à isoler et reconstituer les sismogrammes correspondant aux contributions propres des différents vibrateurs 5 tels qu'ils ont été définis dans la description.

**Revendications**

1. Méthode de surveillance sismique d'une formation souterraine (1) comportant l'emission d'ondes sismiques dans la formation, la réception des signaux renvoyées par la formation en réponse à l'émission des ondes sismiques, l'enregistrement des signaux reçus par au moins un capteur sismique (4) et la formation de sismogrammes par traitement des signaux enregistrés, **caractérisée en ce que :**

   - l'émission est réalisée en couplant avec la formation au moins deux vibrateurs (5) émettant simultanément et pilotés par des signaux orthogonaux les uns relativement aux autres constitués de sinusoïdes de fréquences différentes les unes des autres aussi bien par leurs composantes fondamentales que par leurs harmoniques respectives, de manière à former un signal vibratoire composite ; et
   - le traitement comporte une discrimination des contributions respectives des vibrateurs au signal vibratoire composite et une reconstruction de sismogrammes équivalents à ceux que l'on obtiendrait en actionnant séparément les vibrateurs.

2. Méthode selon la revendication 1, **caractérisée en ce que** l'on émet des signaux orthogonaux formés à base d'ondelettes, de polynomes de Legendre ou de séries aléatoires.

3. Méthode selon la revendication 1, **caractérisée en ce que** l'on réalise la discrimination des contributions respectives des vibrateurs par détermination de l'amplitude et de la phase du signal vibratoire composite aux fréquences fondamentales des signaux de pilotage appliqués aux vibrateurs.

4. Méthode selon l'une des revendications précédentes, **caractérisée en ce que** la discrimination des contributions respectives des vibrateurs (5) comporte une pondération des signaux enregistrés par un facteur (13) de pondération en cloche et une détermination de l'amplitude et de la phase du signal composite.

5. Méthode selon la revendication précédente, **caractérisée en ce que** la discrimination des contributions respectives des vibrateurs comporte une sélection par transformée de Fourier, de raies (15-18) du spectre complexe associées respectivement aux différents signaux pondérés.

6. Méthode selon l'une des revendications précédentes, **caractérisée en ce que** l'on réalise la reconstruction des sismogrammes correspondant spécifiquement aux différents vibrateurs en appliquant, après leur séparation, une transformée de Fourier inverse, aux raies (19, 20) associées respectivement aux différents signaux pondérés.

7. Méthode selon l'une des revendications précédentes, **caractérisée en ce, que** l'on décale par pas de fréquence, à intervalles de temps déterminés, les fréquences des signaux de pilotage orthogonaux appliqués respectivement aux différents vibrateurs de façon à balayer une certaine bande de fréquence d'émission $[f_b - f_f]$.

8. Système de surveillance sismique d'une formation souterraine comportant des moyens d'émission de vibrations sismiques dans la formation, des moyens de réception des signaux renvoyés par la formation en réponse à l'émission des ondes sismiques, des moyens d'enregistrement des signaux reçus par les moyens de réception des signaux et des moyens de traitement de signaux enregistrés pour former des sismogrammes, **caractérisé en ce que :**

- les moyens d'émission comportent au moins deux vibrateurs (5) et des moyens (8) pour générer des signaux orthogonaux les uns relativement aux autres constitués de sinusoïdes de fréquences différentes les unes des autres aussi bien par leurs composantes fondamentales que par leurs harmoniques respectives, et les appliquer simutanément respectivement aux vibrateurs (5) de manière à générer dans la formation un signal vibratoire composite ; et

- les moyens de traitement comportent au moins un calculateur (6) adapté à effectuer une discrimination dans le domaine fréquentiel des contributions respectives des vibrateurs au signal vibratoire composite et une reconstruction de sismogrammes équivalents à ceux que l'on obtiendrait en actionnant séparément les vibrateurs.

**9.** Système selon la revendication 8, **caractérisé en ce qu'**il comporte une pluralité d'unités locales (LU) disposées à distance les uns des autres et couplées avec la formation, chaque unité comportant au moins un capteur sismique (4), un vibrateur sismique (5), un dispositif local (6) d'acquisition et de traitement des signaux reçus, et une unité centrale de commande et de synchronisation (8) connectée aux différentes unités locales, comprenant un générateur de signaux adapté à appliquer aux vibrateurs (5), les signaux vibratoires de pilotage orthogonaux.

**10.** Système selon la revendication 9, **caractérisé en ce que** l'unité centrale de commande et de synchronisation (8) est connectée aux différentes unités locales par des moyens de liaison matérielle ou immatérielle.

**11.** Système selon la revendication 9 ou 10, **caractérisé en ce qu'**il comporte une pluralité d'unités locales (LU) disposées à distance les uns des autres et couplées avec la formation, chaque unité comportant au moins un capteur sismique, un vibrateur sismique (5), et une unité centrale de commande et de synchronisation (8) connectée aux différentes unités locales (LU) comprenant un générateur de signaux adapté à former les différents signaux vibratoires de pilotage orthogonaux, et des moyens d'acquisition des signaux reçus par les différentes antennes (2) et de reconstruction des sismogrammes correspondant aux contributions des différents vibrateurs (5).

**12.** Système selon la revendication 10 ou 11, **caractérisé en ce que** les moyens de réception comportent au moins une antenne (2) constituée de plusieurs capteurs sismiques (4) disposés le long d'un puits (3) ménagé dans la formation, cette antenne étant connectée à des moyens d'enregistrement.

## Claims

**1.** Method for seismic monitoring of a subterranean formation (1) comprising the transmission of seismic waves into the formation, the receipt of the signals sent back by the formation in response to the transmission of the seismic waves, the recording of the signals received by at least one seismic sensor (4) and the formation of seismograms by processing the recorded signals, **characterised in that:**

- transmission is carried out by coupling, with the formation, at least two vibrators (5) which transmit simultaneously and are driven by signals that are orthogonal in relation to each another and made up of sine waves having frequencies that are different to each other both through their fundamental components and through their respective harmonics, so as to form a composite vibratory signal; and
- processing comprises a discrimination of the respective contributions of the vibrators with the composite vibratory signal and a reconstruction of seismograms equivalent to those that would be obtained by separately actuating the vibrators.

**2.** Method according to Claim 1, **characterised in that** orthogonal signals formed from wavelets, Legendre polynomials or random series are transmitted.

**3.** Method according to Claim 1, **characterised in that** the discrimination of the respective contributions of the vibrators is carried out by determining the amplitude and the phase of the composite vibratory signal at the fundamental frequencies of the drive signals applied to the vibrators.

**4.** Method according to one of the preceding claims, **characterised in that** the discrimination of the respective contributions of the vibrators (5) comprises a weighting of the recorded signals by a bell weighting factor (13) and a determination of the amplitude and of the phase of the composite signal.

**5.** Method according to the preceding claim, **characterised in that** the discrimination of the respective contributions of the vibrators comprises a selection, via Fourier transform, of lines (15-18) of the complex spectrum which are associated respectively with the various weighted signals.

6. Method according to one of the preceding claims, **characterised in that** reconstruction of the seismograms corresponding specifically to the various vibrators is carried out by applying, after their separation, an inverse Fourier transform to the lines (19, 20) associated respectively with the various weighted signals.

7. Method according to one of the preceding claims, **characterised in that** the frequencies of the orthogonal drive signals which are applied respectively to the various vibrators are staggered by frequency pitch at determined time intervals so as to sweep a certain transmission frequency band [$f_b$ - $f_f$].

8. System for seismic monitoring of a subterranean formation comprising means for transmitting seismic vibrations into the formation, means for receiving the signals sent back by the formation in response to the transmission of the seismic waves, means for recording the signals received by the means for receiving the signals and means for processing recorded signals in order to form seismograms, **characterised in that:**

   - the transmission means comprise at least two vibrators (5) and means (8) for generating signals that are orthogonal in relation to each other and that are made up of sine waves of frequencies that are different to each other both through their fundamental components and through their respective harmonics, and applying them respectively and simultaneously to the vibrators (5) so as to generate a composite vibratory signal in the formation; and
   - the processing means comprise at least one computer (6) for carrying out a discrimination in the frequency domain of the respective contributions of the vibrators with the composite vibratory signal and a reconstruction of seismograms equivalent to those that would be obtained by separately actuating the vibrators.

9. System according to Claim 8, **characterised in that** it comprises a plurality of local units (LU) that are arranged at distance from each other and coupled with the formation, each unit comprising at least a seismic sensor (4), a seismic vibrator (5), a local device (6) for acquiring and processing the received signals, and a central control and synchronisation unit (8) connected to the various local units, including a signal generator for applying the orthogonal drive vibratory signals to the vibrators (5).

10. System according to Claim 9, **characterised in that** the central control and synchronisation unit (8) is connected to the various local units via physical or non-physical linking means.

11. System according to claim 9 or 10, **characterised in that** it comprises a plurality of local units (LU) that are arranged at distance from each other and coupled with the formation, each unit comprising at least a seismic sensor, a seismic vibrator (5), and a central control and synchronisation unit (8) connected to the various local units (LU) including a signal generator for forming the various orthogonal drive vibratory signals, and means for acquiring the signals received by the various antennas (2) and for reconstructing the seismograms corresponding to the contributions of the various vibrators (5).

12. System according to claim 10 or 11, **characterised in that** the receiving means comprise at least one antenna (2) made up of several seismic sensors (4) positioned along a well (3) arranged in the formation, this antenna being connected to recording means.

**Patentansprüche**

1. Verfahren zur seismischen Überwachung einer unterirdischen Formation (1), das das Aussenden von seismischen Wellen in die Formation, den Empfang der durch die Formation als Reaktion auf das Aussenden der seismischen Wellen zurückgestrahlten Signale, die Aufzeichnung der durch mindestens einen Erdbebensensor (4) empfangenen Signale und die Bildung von Seismogrammen durch Verarbeitung der aufgezeichneten Signale umfasst, **dadurch gekennzeichnet, dass:**

   - das Aussenden durch das Koppeln von mindestens zwei Vibratoren (5) mit der Formation ausgeführt wird, die gleichzeitig aussenden und durch Signale gesteuert werden, die orthogonal zueinander sind und durch Sinuswellen von sowohl durch ihre Grundkomponenten als auch durch ihre jeweiligen Oberschwingungen voneinander unterschiedlichen Frequenzen gebildet werden, derart dass ein Vibrationssummensignal gebildet wird; und

- die Verarbeitung eine Trennung der jeweiligen Beiträge der Vibratoren zum Vibrationssummensignal und eine Rekonstruktion von Seismogrammen umfasst, die denjenigen entsprechen, die bei einer getrennten Betätigung der Vibratoren erhalten würden.

2. Verfahren nach Anspruch 1, **dadurch gekennzeichnet, dass** orthogonale Signale ausgesendet werden, die auf der Grundlage von Wavelets, Legendreschen Polynomen oder Zufallsfolgen gebildet werden.

3. Verfahren nach Anspruch 1, **dadurch gekennzeichnet, dass** die Trennung der jeweiligen Beiträge der Vibratoren durch Bestimmung der Amplitude und der Phase des Vibrationssummensignals bei den Grundfrequenzen der an die Vibratoren angelegten Steuersignale ausgeführt wird.

4. Verfahren nach einem der vorhergehenden Ansprüche, **dadurch gekennzeichnet, dass** die Trennung der jeweiligen Beiträge der Vibratoren (5) eine Gewichtung der aufgezeichneten Signale mit einem glockenförmigen Gewichtungsfaktor (13) und eine Bestimmung der Amplitude und der Phase des Summensignals umfasst.

5. Verfahren nach einem der vorhergehenden Ansprüche, **dadurch gekennzeichnet, dass** die Trennung der jeweiligen Beiträge der Vibratoren eine Auswahl von Linien (15 bis 18) des jeweils den unterschiedlichen gewichteten Signalen zugehörigen komplexen Spektrums durch Fourier-Transformation umfasst.

6. Verfahren nach einem der vorhergehenden Ansprüche, **dadurch gekennzeichnet, dass** die Rekonstruktion der Seismogramme, die spezifisch den unterschiedlichen Vibratoren entsprechen, nach ihrer Trennung durch Anwenden einer inversen Fourier-Transformation auf die den jeweils unterschiedlichen gewichteten Signalen zugehörigen Linien (19, 20) ausgeführt wird.

7. Verfahren nach einem der vorhergehenden Ansprüche, **dadurch gekennzeichnet, dass** die Frequenzen der jeweils an die unterschiedlichen Vibratoren angelegten orthogonalen Steuersignale in bestimmten Zeitintervallen um Frequenzschritte versetzt werden, um ein bestimmtes Aussendungsfrequenzband [$f_b$ bis $f_{f1}$] abzutasten.

8. System zur seismischen Überwachung einer unterirdischen Formation, die Mittel zum Aussenden von seismischen Wellen in die Formation, Mittel zum Empfang der durch die Formation als Reaktion auf das Aussenden der seismischen Wellen zurückgestrahlten Signale, Mittel zur Aufzeichnung der durch die Mittel zum Empfang der Signale empfangenen Signale und Mittel zur Verarbeitung von aufgezeichneten Signalen zur Bildung von Seismogrammen umfasst, **dadurch gekennzeichnet, dass:**

   - die Mittel zum Aussenden mindestens zwei Vibratoren (5) und Mittel (8) zum Erzeugen von Signalen, die orthogonal zueinander sind und aus Sinuswellen von sowohl durch ihre Grundkomponenten als auch durch ihre jeweiligen Oberschwingungen voneinander unterschiedlichen Frequenzen gebildet sind, und zu ihrem gleichzeitigen Anlegen an entsprechende Vibratoren (5) umfassen, derart dass in der Formation ein Vibrationssummensignal gebildet wird; und
   - Mittel zur Verarbeitung, die mindestens einen Rechner (6) umfassen, der angepasst ist, um im Frequenzbereich eine Trennung der jeweiligen Beiträge der Vibratoren zum Vibrationssummensignal und eine Rekonstruktion von Seismogrammen durchzuführen, die denjenigen entsprechen, die bei einer getrennten Betätigung der Vibratoren erhalten würden.

9. System nach Anspruch 8, **dadurch gekennzeichnet, dass** es mehrere lokale Einheiten (LU) umfasst, die voneinander entfernt angeordnet sind und an die Formation gekoppelt sind, wobei jede Einheit mindestens einen Erdbebensensor (4), einen seismischen Vibrator (5), eine lokale Vorrichtung (6) zur Erfassung und Verarbeitung der empfangenen Signale und eine zentrale Steuerungs- und Synchronisationseinheit (8) umfasst, die mit den unterschiedlichen lokalen Einheiten verbunden ist, die einen Signalgenerator umfassen, der eingerichtet ist, um die orthogonalen Vibrationssteuersignale an die Vibratoren (5) anzulegen.

10. System nach Anspruch 9, **dadurch gekennzeichnet, dass** die zentrale Steuerungs- und Synchronisationseinheit (8) durch materielle oder immaterielle Verbindungsmittel mit den unterschiedlichen lokalen Einheiten verbunden ist.

11. System nach Anspruch 9 oder 10, **dadurch gekennzeichnet, dass** es mehrere lokale Einheiten (LU) umfasst, die voneinander entfernt angeordnet und an die Formation gekoppelt sind, wobei jede Einheit mindestens einen Erdbebensensor, einen seismischen Vibrator (5) und eine zentrale Steuerungs- und Synchronisationseinheit (8) umfasst, die mit den unterschiedlichen lokalen Einheiten (LU) verbunden ist, die einen Signalgenerator, der eingerichtet ist, um die unterschiedlichen orthogonalen Vibrationssteuersignale zu bilden, und Mittel zur Erfassung der durch die unterschiedlichen Antennen (2) empfangenen Signale und zur Rekonstruktion der Seismogramme umfassen, die den Beiträgen der unterschiedlichen Vibratoren (5) entsprechen.

12. System nach Anspruch 10 oder 11, **dadurch gekennzeichnet, dass** die Empfangsmittel mindestens eine Antenne (2) umfassen, die aus mehreren Erdbebensensoren (4) besteht, die entlang eines in der Formation eingerichteten Schachts (3) angeordnet sind, wobei diese Antenne mit Aufzeichnungsmitteln verbunden ist.

## FIG.1

## FIG 2

**FIG.3**

**FIG.4**

## FIG.5

| | | |
|---|---|---|
| Sinusoïdes de fréquence i*$f_0$ | $a*f_0$ / $b*f_0$ | (11) |
| Enregistrement brut | | (12) |
| Troncature (Facteur d'apodisation) | | (13) |
| Enregistrement apodisé | | (14) |
| Transformée de Fourier de l'enregistrement apodisé | P. réelle | (15) |
| | P. imaginaire | (16) |
| Raie sélectionnée pour la source a | P. réelle | (17) |
| | P. imaginaire | (18) |
| Transformée de Fourier du sismogramme associé à la source a | P. réelle | (19) |
| | P. imaginaire | (20) |
| Sismogramme reconstruit | | (21) |

$a*f_0$   $b*f_0$   $c*f_0$   $d*f_0$

## FIG.6

X1   X2   •R

1

**EP 1 173 781 B1**

**RÉFÉRENCES CITÉES DANS LA DESCRIPTION**

**Documents brevets cités dans la description**

- EP 591037 A
- US 5461594 A
- FR 2593292
- US 4775009 A
- FR 2728973
- US 5724311 A
- FR 2775349
- FR 9904001
- FR 2589587
- US 4780856 A